# EUROPÄISCHE PATENTANMELDUNG

(11) **EP 0 739 810 A1**
(43) Veröffentlichungstag der Anmeldung: **30.10.1996**
(21) Anmeldenummer: 96101805.8
(22) Anmeldetag: 08.02.1996
(51) Int. Cl.: B62K 23/04, B62K 21/26

(54) **Drehgriffschalter für Fahrräder**

(30) Priorität: 29.04.1995 DE 29507220 U
(71) Anmelder: FICHTEL & SACHS AG, D-97424 Schweinfurt (DE)
(72) Erfinder: Neumann, Klaus, Dipl.-Ing. (FH), D-97464 Niederwerrn (DE)

(57) **Zusammenfassung**

Die Erfindung betrifft einen Drehgriffschalter für die Steuerung der Gangstufen von Getrieben an Fahrrädern. Der Drehgriffschalter ist mit einem drehbaren, stufenförmige ausgebildeten Griffteil (5) versehen, der einen großen Durchmesser (D1) und einen kleinen Durchmesser (D2) aufweist, wobei der große Durchmesser (D1) an einen Seilaufspulabschnitt (3) und der kleine Durchmesser (D2) an ein lenkerfestes Griffteil (4) anschließt. Von Vorteil ist eine Betätigung des Drehgriffschalters sowohl am kleinen Durchmesser (D2) wie auch am großen Durchmesser (D1) je nach Drehmomentanforderung zur Bewegung des Betätigungsseils in einer Einhol- und einer Freigaberichtung mit verschieden hohen Betätigungskräften.

## Beschreibung

Die Erfindung betrifft einen Drehgriffschalter für Fahrräder, wie er im Oberbegriff des Anspruchs 1 beschrieben ist.

Aus der DE-OS 32 15 427 ist ein Drehgriffschalter bekannt, der einen lenkerfesten Griffteil sowie einen drehbaren Griffteil aufweist, welcher im Durchmesser gegenüber dem lenkerfesten Griffteil deutlich größer ist, um dem Fahrer die Möglichkeit zu geben, mit wenig Kraftaufwand die Schaltung der Fahrradgetriebe zu steuern. In diesem Fall muß der Fahrradfahrer sowohl beim Herauf- als beim Herunterschalten den großen Durchmesser des drehbaren Griffteiles benutzen, um die Gänge zu wechseln. Beim Heraufschalten wird in den meisten Fällen lediglich der Seilzug freigegeben, weshalb keine großen Schaltkräfte erforderlich sind. Beim Herunterschalten jedoch und beim Anziehen des Seilzuges werden ungleich größere Kräfte nötig, da gegen eine Rückstellfeder im Schaltgetriebe des Fahrrades das Seil eingeholt werden muß. Der hier beschriebene Erfindungsvorschlag löst die Aufgabe für die Einholung des Seils gegen die Wirkung der Getriebefeder zwar gut, enthält aber keine Vorschläge zur Freigabe des Seilzugs.

Die vorliegende Erfindung verbessert diese Konstruktion insofern, als zur Freigabe des Seilzuges ein zusätzlicher Bereich mit kleinem Durchmesser am drehbaren Griffteil angeformt ist, wobei dieser Durchmesser sich nur gering von den Durchmesser des lenkerfesten Griffteiles unterscheidet. Eine derartige stufenförmige Ausführung des drehbaren Griffteiles ermöglicht also eine Betätigung des Seilzuges zum Fahrradgetriebe in beiden Richtungen mit relativ geringem Kraftaufwand, wobei die Freigabe des Seilzuges über den Bereich mit dem kleinen Durchmesser erfolgt und die Einholung des Seilzuges über den Bereich mit dem großen Durchmesser des drehbaren Griffteiles erfolgt.

Diese Gegenüberstellung der Vorteile beinhaltet gleichzeitig die Aufgabe der Erfindung, einen Drehgriffschalter mit einem drehbaren Griffteil zu schaffen, mit welchem die Einholung des Zugseils bzw. die Überwindung höherer Betätigungskräfte über einen Bereich mit großem Durchmesser und bei welchem die Freigabe des Zugseils über einen Bereich mit kleinem Durchmesser erfolgen kann.

Die Lösung dieser Aufgabe ist in den Ansprüchen beschrieben. Anhand von Zeichnungen werden mehrere Ausführungsbeispiele eines Drehgriffschalters mit einem stufenförmigen drehbaren Griffteil beschrieben. Es zeigen:
- Fig. 1: einen Drehgriffschalter mit einem lenkerfesten Griffteil und einem drehbaren Griffteil in perspektivischer Ansicht;
- Fig. 2: einen Drehgriffschalter analog Fig. 1 mit einer Variante hinsichtlich Oberflächenstruktur;
- Fig. 3: einen Drehgriffschalter mit der Technik der Drehgriffschalter gemäß Fig. 1 und Fig. 2, jedoch mit einem ringförmigen Wulst am lenkerfesten Griffteil.

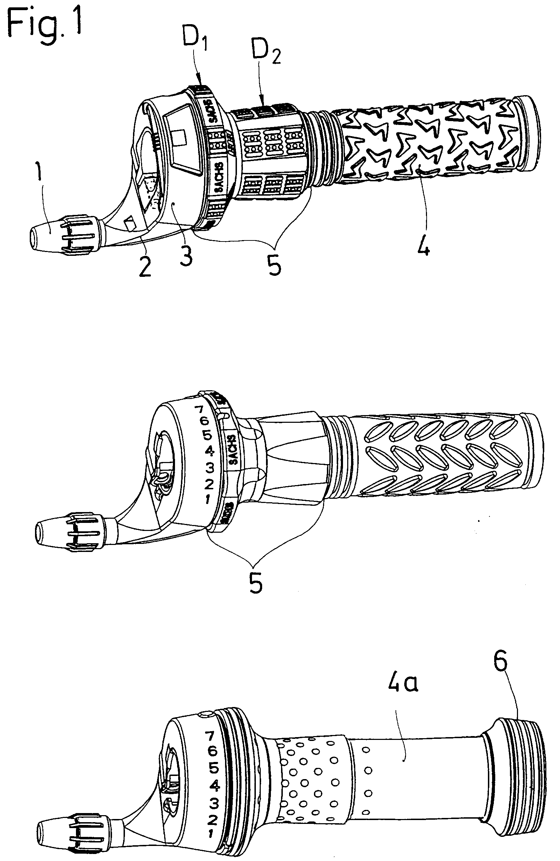

In Fig. 1 ist ein Drehgriffschalter mit einem Anschluß für einen Betätigungszug 1, einem Seileinlaufabschnitt 2, einem Seilaufspulabschnitt 3, der eine Wickeltrommel zum Aufspulen des Betätigungszuges enthält, einem lenkerfesten Griffteil 4 sowie einem drehbaren Griffteil 5 beschrieben. Der drehbare Griffteil 5 schließt an den Seilaufspulabschnitt 3 direkt an und liegt zwischen diesem und dem lenkerfesten Griffteil 4. Der drehbare Griffteil 5 weist einen Bereich mit großem Durchmesser D1 und einen Bereich mit keinem Durchmesser D2 auf, wobei sich der drehbare Griffteil 5 an den Seilaufspulabschnitt 3 anschließt und der Bereich mit keinem Durchmesser D2 sich an den lenkerfesten Griffteil 4 anschließt. Hierbei entsprechen die Durchmesser einmal des Bereichs mit großem Durchmesser D1 und des Seilaufspulabschnitts 3 sowie des lenkerfesten Griffteils 4 und des Bereichs mit keinem Durchmesser D2 einander in etwa. Der drehbare Griffteil 5 weist somit im Längsschnitt eine stufenartige Kontur auf, wobei die Verbindungslinie zwischen den beiden Bereichen mit den Durchmesser D1 und D2 in dieser Kontur einen Kegel oder aber einen radialen Übergang analog der Fig. 3 beschreibt.

Der Bereich mit großem Durchmesser D1 und der Bereich mit kleinem Durchmesser D2 sowie der lenkerfeste Griffteil tragen eine strukturierte Oberfläche, wobei die Struktur am lenkerfesten Griffteil 4 keine besondere Ausrichtung aufweist, da sie lediglich der Durchlüftung der von der Hand des Fahrradfahrers umschlossenen Zylinderfläche dient. Die Oberfläche des Bereichs mit dem kleinen Durchmesser D2 sowie die Oberfläche des Bereichs mit großen Durchmessers D1 weisen hingegen eine Oberflächenstruktur auf, die eine zur Mittelachse des Drehgriffschalters parallele Ausrichtung hat, um das vom Fahrer aufgebrachte Drehmoment besser auf den drehbaren Griffteil 5 übertragen zu können. Wie aus den Fig. 1 und 2 hervorgeht, weist diese Oberflächenstruktur insbesondere am großen Durchmesser D1 sogar stark erhaben oder eingezogen ausgeführte Partien auf, die es dem Fahrradfahrer ermöglichen, zwischen seinen Fingern und dem drehbaren Griffteil 5 eine formschlüssige Verbindung herzustellen, die den Kraftaufwand beim Einziehen des Seilzuges noch zusätzlich reduzieren kann. Der Vorteil der stufenförmigen Ausbildung des drehbaren Griffteils 5 liegt darin, daß die Hand des Fahrradfahrers sowohl den drehfesten Griffteil 4 als auch den Bereich mit dem kleinen Durchmesser D2 des drehbaren Griffteils 5 umschließt während er das Fahrrad lenkt. Im Falle der Schaltung, insbesondere der Freigabe des Betätigungszuges werden nur geringe Schaltkräfte benötigt, was dem Fahrradfahrer die Möglichkeit gibt, die Hand an Ort und Stelle zu lassen, wenn er den drehbaren Griffteil 5 des Drehgriffschalters betätigt. Im Falle der Einholung des Betätigungszuges auf die Wickeltrommel im Seilaufspulabschnitt 3 sind größere Drehkräfte erforderlich, weshalb der Fahrradfahrer die Möglichkeit hat, mit seiner Bedienungshand geringfügig zur Lenkermitte hin zu verschieben und den Bereich mit dem großen Durchmesser D1 des drehbaren Griffteiles 5 zu umgreifen. Auf diese Weise können höhere Betätigungskräfte auf das Betätigungsseil ausgeübt werden.

Die Oberfläche des drehbaren Griffteils 5 weist im Bereich des großen Durchmessers D1 und im Bereich der kleinen Durchmessers D2 eine Oberflächenstruktur auf, die zur Übertragung vom Drehmoment in Richtung der Mittelachse des Drehgriffschalters ausgerichtet ist und daher geeignet ist, das Abrutschen der Hand des Fahrradfahrers zu vermeiden. Der lenkerfeste Griffteil 4 weist eine Oberflächenstruktur mit erhabenen Flächenabschnitten auf, die die Aufgabe haben, die Berührungsfläche zwischen der Hand des Fahrradfahrers und dem drehfesten Griffteil 4 zu durchlüften.

Gemäß Fig. 2 ist eine Variante des in Fig. 1 beschriebenen Drehgriffschalters gezeigt, bei der die Oberflächenstruktur des lenkerfesten Griffteils 4, des Bereichs mit kleinem Durchmesser D2 sowie des großen Durchmessers D1 von den Oberflächenstrukturen des Drehgriffschalters gemäß Fig. 1 verschieden sind, jedoch die gleiche Aufgabe erfüllen. Der Übergang zwischen den Bereichen mit großem Durchmesser D1 und mit kleinen Durchmesser D2 wird sowohl bei der Ausführungsform gemäß Fig. 1 als auch bei der Ausführungsform gemäß Fig. 2 mit einer Oberflächenstruktur versehen, was den Vorteil bietet, die Überwindung von erhöhtem Drehmoment lediglich durch Andrücken der Hand gegen diesen Übergangsbereich zu erleichtern.

Die Fig. 3 zeigt einen Drehgriffschalter, dessen lenkerfester Griffteil 4a einen ringförmigen Wulst 6 aufweist, der am mit dem Lenkerende zusammenfallenden Ende des lenkerfesten Griffteils angeordnet ist und im Durchmesser, in der Form sowie in der Oberflächenstruktur dem mit dem großen Durchmesser versehenen Anteil des drehbaren Griffteils gleicht. Der Vorteil des ringförmigen Wulstes 6 liegt in der optischen Aufwertung des Drehgriffschalters aber auch in der erhöhten Sicherheit für das Lenkerende bei Stoßbelastung und schließlich in der zum Lenkerende hin verbesserten Führung der Hand des Fahrradfahrers.

## Patentansprüche

1. Drehgriffschalter für die Steuerung der Gangstufen von Getrieben an Fahrrädern, umfassend
* einen Anschluß für einen Betätigungszug (2),
* einen Seileinlaufabschnitt (2),
* eine Wickeltrommel in einem Seilaufspulabschnitt (3),
* einen lenkerfesten Griffteil (4),
* einen drehbaren mit der Wickeltrommel verbundenen Griffteil (5),
dadurch gekennzeichnet, daß die Kontur des drehbaren Griffteiles (5) stufenförmig ausgebildet ist und im wesentlichen einen Bereich mit großem Durchmesser (D1) und einen Bereich mit kleinem Durchmesser (D2) aufweist, wobei der Bereich mit dem großen Durchmesser (D1) an den Seilaufspulabschnitt (3) anschließt und der Bereich mit dem kleinen Durchmesser (D2) zum lenkerfesten Griffteil (4) hin gerichtet ist und diesem gegenüber einen nur geringfügig unterschiedlichen Durchmesser aufweist.

2. Drehgriffschalter nach Anspruch 1, dadurch gekennzeichnet, daß die Oberfläche des drehfesten Griffteils (4) ein erstes, ungerichtetes, strukturiertes Oberflächenprofil zur Belüftung aufweist.

3. Drehgriffschalter nach einem der Ansprüche 1 oder 2, dadurch gekennzeichnet, daß die Oberfläche des drehbaren Griffteils (5) sowohl im Bereich des großen Durchmessers (D1) als auch im Bereich des kleinen Durchmessers (D2) jeweils ein gerichtetes Oberflächenprofil zur Drehmomentübertragung aufweist.

4. Drehgriffschalter nach einem der Ansprüche 1 bis 3, dadurch gekennzeichnet, daß der Bereich mit dem kleinen Durchmesser (D2) des drehbaren Griffteils (5) geringfügig variieren kann, so daß eine drehsymtrische Form entsteht, die von der Zylinderform abweicht.

5. Drehgriffschalter nach Anspruch 4, dadurch gekennzeichnet, daß der drehbare Griffteil (5) im Bereich des kleinen Durchmessers (D2) eine Kegelform aufweist.

6. Drehgriffschalter nach einem der Ansprüche 4 oder 5, dadurch gekennzeichnet, daß der drehbare Griffteil (5) an der Stelle des Übergangs vom Bereich mit dem kleinen Durchmesser (D2) auf den Bereich des großen Durchmessers (D1) seinen kleinsten Durchmesser aufweist.

7. Drehgriffschalter nach Anspruch 1, dadurch gekennzeichnet, daß der lenkerfeste Griffteil (4) an der Stelle des Lenkerendes eine ringförmigen Wulst (6) aufweist, dessen Gestaltung hinsichtlich Durchmesser, Form und Oberflächenstruktur der Form des Bereiches mit dem großen Durchmesser (1) des drehbaren Griffteils (5) gleicht.
